# EUROPEAN PATENT SPECIFICATION

(11) **EP 2 645 623 B1**
(45) Date of publication and mention of the grant of the patent: **02.01.2019**
(21) Application number: 11874904.3
(22) Date of filing: 02.11.2011
(51) Int. Cl.: H04L 12/24, H04L 12/26, H04W 24/02

(54) **METHOD, DEVICE AND SYSTEM FOR MANAGING WIRELESS TERMINAL BY REMOTE SERVER**
VERFAHREN, VORRICHTUNG UND SYSTEM ZUR VERWALTUNG VON DRAHTLOSEN ENDGERÄTEN ÜBER EINEN REMOTE-SERVER
PROCÉDÉ, DISPOSITIF ET SYSTÈME POUR LA GESTION D'UN TERMINAL SANS FIL PAR UN SERVEUR DISTANT

(43) Date of publication of application: 02.10.2013
(73) Proprietor: ZTE Corporation, Shenzhen, Guangdong 518057 (CN)
(72) Inventor: MA, Xiaoliang, Shenzhen Guangdong 518057 (CN)
(74) Representative: Tellefsen, Jens J.
(86) International application number: PCT/CN2011/081687
(87) International publication number: WO 2013/063775

(56) References cited:
- EP-A1- 1 615 376
- EP-A1- 1 715 627
- WO-A2-99/57649
- CN-A- 101 667 926
- CN-A- 102 075 351
- CN-A- 102 136 926
- US-A- 6 128 656
- US-A1- 2004 193 711
- US-A1- 2011 153 651
- Jeong-Hyuk Yoon ET AL: "Development of SNMP-XML translator and gateway for XML-based integrated network management", International Journal of Network Management, vol. 13, no. 4, 1 July 2003 (2003-07-01), pages 259-276, XP055143256, ISSN: 1055-7148, DOI: 10.1002/nem.478

## Description

### Technical Field

The present document relates to a technique of wireless broadband device management in the wireless network, and particularly, to a method, device and system for a remote server managing a wireless broadband device.

### Background of the Related Art

With the development of the wireless network technology, a way of supporting mobile terminals (e.g. an intelligent phone) or computers to surf the Internet through wireless broadband device such as the 3rd-generation mobile communication technology (3G) data card or MiFi (a well known registered trademark brand) products and so on has been adopted by the majority of users. Since a wireless broadband device is small and exquisite and easy to carry, it enables the users to select a place for netsurfing more flexibly, and thus a way of surfing on a wireless internet is extensively used in the business area and household.

However, at the present, the wireless broadband device cannot send its own configuration information and operating state to a remote server, and the remote server also cannot configure and manage the wireless broadband device, thus, a network administrator fails to know the configuration and operation status of the wireless broadband device through the remote server, and also fails to make statistics and analysis on status of the wireless broadband device logging on the network. Moreover, when a user who uses the wireless broadband device and network terminal to surf the Internet meets a network configuration problem, the network administrator cannot implement a technical support by the remote server configuring on the wireless broadband device, which causes that the problem of the user cannot be solved in time.

Relevant technologies are also known from WO 99/57649 A2 (INTERMEC IP CORP [US]; HUNT JEFFREY M [US]; RAMBERG JON R [US]; SHOEMA) 11 November 1999 (1999-11-11); EP 1 615 376 A1 (FUJITSU LTD [JP]) 11 January 2006 (2006-01-11); US 2004/193711 A1 (MARILLY EMMANUEL [FR] ET AL) 30 September 2004 (2004-09-30); US 2011 /153651 A1 (KIM SOON CHOUL [KR] ET AL) 23 June 2011 (2011-06-23); CN 102 075 351 A (RAISECOM TECHNOLOGY INC.) 25 May 2011 (2011-05-25); CN 102 136 926 A (EWAUTO BEIJING VIDEO TECHNOLOGY CO., LTD.) 27 July 2011 (2011-07-27); and CN 101 667 926 A (ZTE CORP.) 10 March 2010 (2010-03-10).

US 6128656 A1 discloses a system for updating a memory storing configuration information of a network element includes a network element and a network manager coupled to the network element using a communication network.

EP 1715627 A1 discloses a method for synchronizing the configuration data between an EMS and a NE, which includes: dividing the configuration data in the NE into several layers so that different configuration data layers include different minimum unit configuration data sets; setting a minimum unit identifier word for each configuration data layer to identify the configuration data changes of the configuration data layer; when the configuration data of the NE is changed, changing the corresponding identifier word and sending a configuration changed event notification to EMSs; after receiving the configuration changed event notification, the EMS synchronizes the configuration data according to the event notification.

Jeong-Hyuk Yoon ET AL: "Development of SNMP-XML translator and gateway for XML-based integrated network management", International Journal of Network Management, vol. 13, no. 4, 1 July 2003 (2003-07-01) discloses developing a SNMPMIB to XML translation algorithm and to implement an SNMP-XML gateway using this algorithm.

### Summary of the Invention

In view of this, the main object of the present document is to provide a method and devices for a remote server managing a wireless broadband device, which can implement an management on the wireless broadband device by the remote server.

The features of the method and devices according to the present document are defined in the independent and dependent claims.

Provided is a method for a remote server managing a wireless broadband device, which comprises the method steps according to independent claim 1.

Also provided is a remote server according to independent claim 3.

Also provided is a wireless broadband device according to independent claim 5.

It can be known from the above that, the remote server provided in the present document sends the request for acquiring the parameter information of the wireless broadband device to the wireless broadband device, and the wireless broadband device sends the corresponding parameter information in the MIB preset in the wireless broadband device to the remote server according to the request sent by the remote server, thus the wireless broadband device can send its own usage and configuration status to the remote server, such that a network administrator can learn the usage and configuration status of the wireless broadband device through the remote server, and then to make statistics and analysis on status of the wireless broadband device logging on the network through the remote server, thereby implementing the management by the remote server for the wireless broadband device.

### Brief Description of Drawings

FIG. 1 is a schematic diagram of an implementation flow of a method for a remote server managing a wireless broadband device according to the example 1 of the present document.
FIG. 2 is a schematic diagram of a structure of an extended OID in an MIB used by the present document.
FIG. 3 is a schematic diagram of an implementation flow of a method for a remote server managing a wireless broadband device according to the example 2 of the present document.
FIG. 4 is a schematic diagram of an implementation flow of another method for a remote server managing a wireless broadband device according to the example of the present document.
FIG. 5 is a schematic diagram of information transmission between a network terminal, wireless broadband device and remote server when the wireless broadband device is in a log-in network state.
FIG. 6 is a schematic diagram of an implementation flow of another method for a remote server managing a wireless broadband device according to the example of the present document.
FIG. 7 is a schematic diagram of information transmission between a network terminal, wireless broadband device and remote server in a case that offline setting and online setting are in synchronization.
FIG. 8 is a schematic diagram of a composition structure of a remote server according to one example of the present document.
FIG. 9 is a schematic diagram of a composition structure of an acquisition request sending unit of the remote server according to one example of the present document.
FIG. 10 is a schematic diagram of a composition structure of a wireless broadband device according to one example of the present document.
FIG. 11 is a schematic diagram of a composition structure of a system for the remote server managing the wireless broadband device according to one example of the present document.

### Preferred Embodiments of the Invention

In considering that an MIB is set in a wireless broadband device, a remote server and the wireless broadband device can perform a data transmission through a Simple Network Management Protocol (SNMP). Therefore, with respect to three status of the remote server managing the wireless broadband device, the present document discloses three corresponding methods for the remote server managing the wireless broadband device: one method is the remote server actively acquiring parameter information of the wireless broadband device; another method is the remote server setting parameter information on the wireless broadband device according to a request of the wireless broadband device; a futher method is the wireless broadband device setting parameter information within a local Node Value (NV) when it is offline, and the remote server setting parameter information within an MIB of the wireless broadband device according to the parameter information within the NV when it is online.

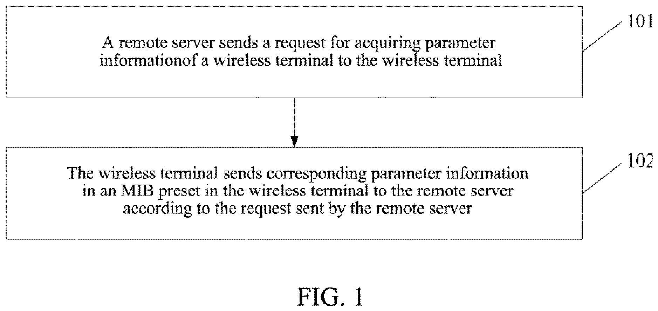

An implementation flow of one method for a remote server managing a wireless broadband device according to the example 1 of the present document is as shown in FIG. 1, and the method includes the following steps.

In step 101, the remote server sends a request for acquiring parameter information of the wireless broadband device to the wireless broadband device.

Specifically, the remote server can send the request for acquiring the information of the wireless broadband device to the wireless broadband device according to a set time interval. For example, the remote server sends a bulk-request message for acquiring the information of the wireless broadband device to the wireless broadband device every minute.

The remote server also can send the request for acquiring the information of the wireless broadband device to the wireless broadband device according to a received acquisition command. For example, when a network administrator needs to acquire certain parameter information of the wireless broadband device according to actual management conditions, the network administrator sends the acquisition command to the remote server, and the remote server sends the request for acquiring the information of the wireless broadband device to the wireless broadband device according to the received acquisition command.

In step 102, the wireless broadband device sends corresponding parameter information in an MIB preset in the wireless broadband device to the remote server according to the request sent by the remote server.

In the step, when the wireless broadband device is in a log-in network state, an snmp-agent process on the wireless broadband device will operate, the process can monitor a port 161 of a local User Datagram Protocol (UDP) and receive a get-request message for acquiring the information of the wireless broadband device; then, the snmp-agent process will send the corresponding parameter information in the MIB preset in the wireless broadband device to the remote server in a form of SNMP-response.

Here, the MIB is an information base provided by the wireless broadband device for accessing by the remote server and is composed of a plurality of OIDs. The OIDs are divided into a standard OID and an extended OID, wherein, the standard OID is used for configuring universal parameter information of the wireless broadband device, and the standard OID includes: a system identifier (system), an interface (if), address translation (at), ip, icmp and tcp and so on. The extended OID is obtained through custom, and the extended OID is used for configuring non-universal parameter information of the wireless broadband device.

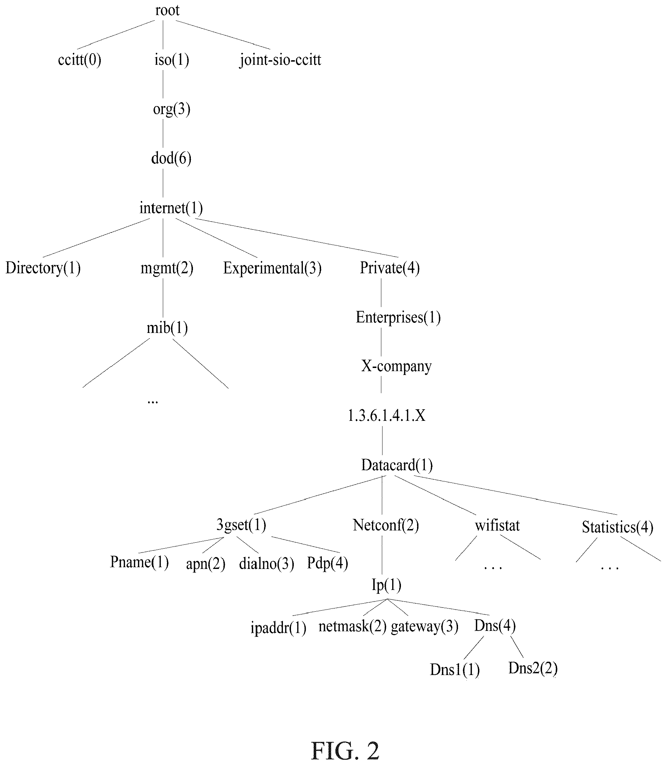

As shown in FIG. 2, an OID whose location is 1.3.6.1.4.1.x is an extended OID, and leaf nodes 3gnet, netconf, Wifistat and statistics below the extended OID and sub-leaf nodes corresponding to the above leaf nodes are all extended OIDs. The extended OID stores the non-universal parameter information of the wireless broadband device to adapt to different data cards or MiFi products. For example, an extended OID whose location is 1.3.6.1.4.1.x.1.2.1.4.1 stores an address dns1 of the wireless broadband device, and an extended OID whose location is 1.3.6.1.4.1.x.1.1.2 stores an address apn of the wireless broadband device.

It can be known from the above that, the wireless broadband device can send the corresponding parameter information in the MIB preset in the wireless broadband device to the remote server according to the request sent by the remote server. Therefore, the network administrator can know configuration and operation status of the wireless broadband device through the remote server and then make statistics and analysis on status of the wireless broadband device logging on the network, and it also can configure and manage the wireless broadband device at the same time.

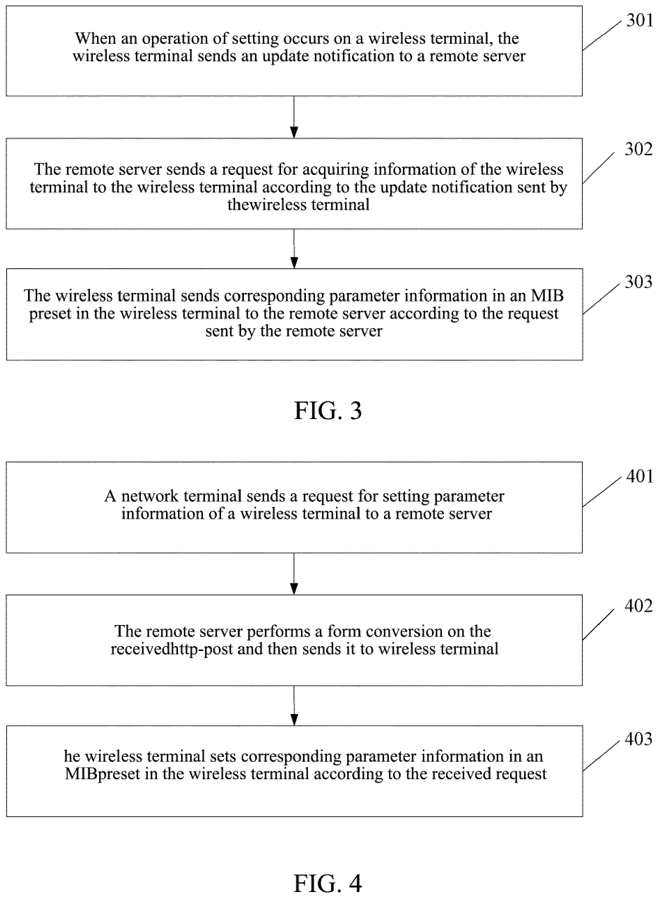

An implementation flow of a method for a remote server managing a wireless broadband device according to the example 2 of the present document is as shown in FIG. 3, and the method includes the following steps.

In step 301, when an operation of setting occurs on the wireless broadband device, the wireless broadband device sends an update notification to the remote server.

Here, the operation of setting can be traffics reaching a preset value. For example, the traffics in a unit time of the wireless broadband device reach the preset value, and the wireless broadband device sends a trap message in an SNMP format to the remote server.

In step 302, the remote server sends a request for acquiring information of the wireless broadband device to the wireless broadband device according to the update notification sent by the wireless broadband device.

In step 303, the wireless broadband device sends corresponding parameter information in an MIB preset in the wireless broadband device to the remote server according to the request sent by the remote server.

It can be known from the above that, when the operation of setting occurs on the wireless broadband device, the wireless broadband device sends the update notification to the remote server. Therefore, a network administrator can know configuration and operation status of the wireless broadband device in time through a remote terminal. For example, when a computer corresponding to the wireless broadband device suffers an attack from the network virus, the network administrator can configure and manage the wireless broadband device in time through the remote server, which prevents the computer of the user from suffering losses.

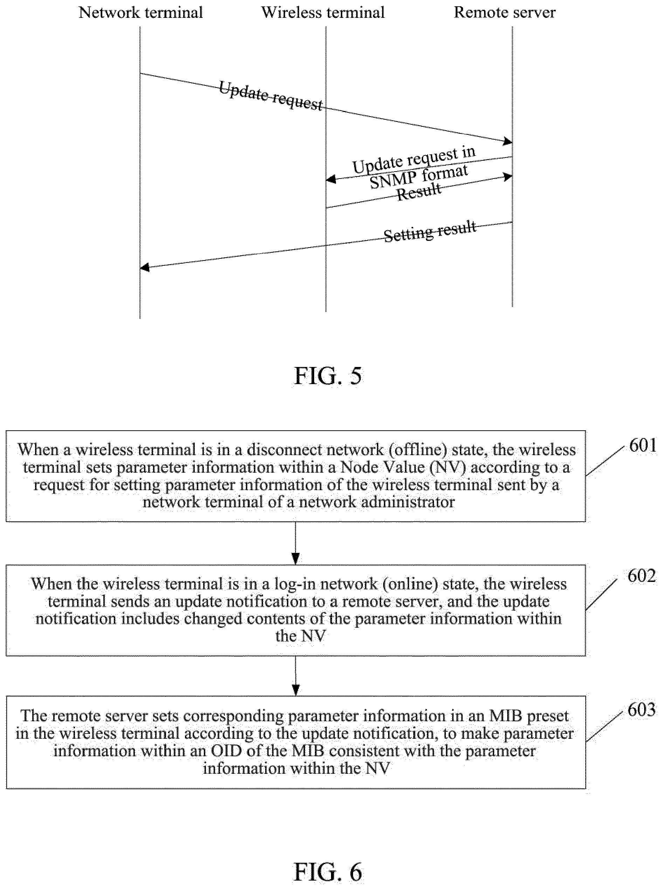

An implementation flow of another method for a remote server managing a wireless broadband device according to the example of the present document may refer to FIG. 4 and FIG. 5, and the method includes the following steps.

In step 401, a network terminal sends a request for setting parameter information of the wireless broadband device to the remote server.

In the step, when the wireless broadband device is in a log-in network state, a network administrator or a user can open a web configuration page of the remote server through the network terminal (e.g. a computer) to perform a remote access, and send an update request (i.e. http-post) for setting the parameter information of the wireless broadband device.

In step 402, the remote server performs a form conversion on the received http-post and then sends it to wireless broadband device.

Here, since the data transmission between the network terminal and the remote server is performed through a HyperText Transfer Protocol (HTTP) and the data transmission between the remote server and wireless broadband device is performed through an SNMP, the remote server is required to convert the received request http-post to an update request in an SNMP format and send the request to the wireless broadband device.

In step 403, the wireless broadband device sets corresponding parameter information in an MIB preset in the wireless broadband device according to the received request.

After the setting is completed, the wireless broadband device sends result information in the SNMP format to the remote server, and the remote server send set-result information in an HTTP format to the network terminal according to the result information, which means that the setting at this time is completed.

It can be known from the above that, the network administrator or user can set the parameter information of the wireless broadband device through the remote server. Therefore, a remote terminal can configure and manage the wireless broadband device.

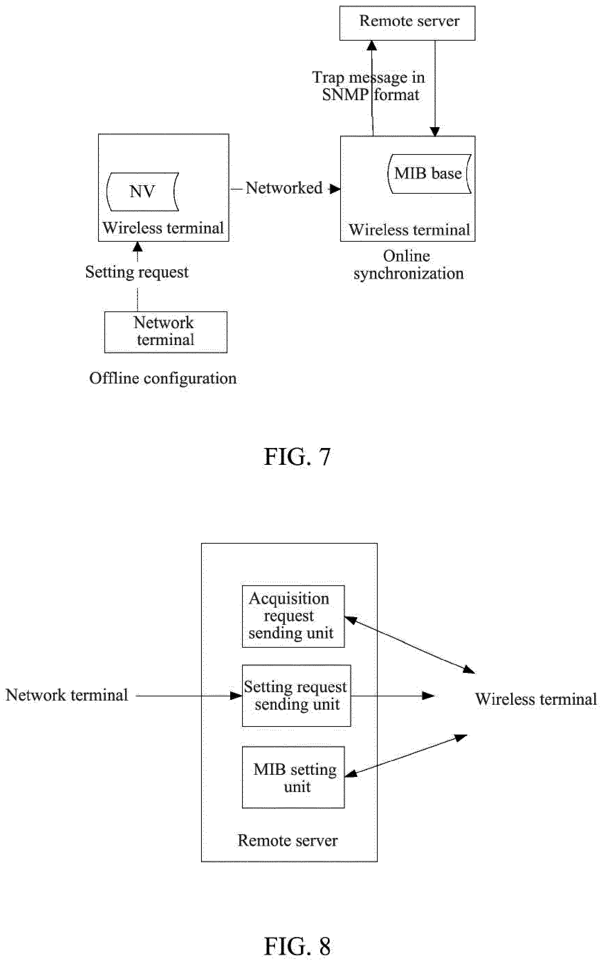

An implementation flow of another method for a remote server managing a wireless broadband device according to the example of the present document may refer to FIG. 6 and FIG. 7, and the method includes the following steps.

In step 601, when the wireless broadband device is in a disconnect network (offline) state, the wireless broadband device sets parameter information within a Node Value (NV) according to a request for setting parameter information of the wireless broadband device sent by a network terminal of a network administrator.

Specifically, when the wireless broadband device is in the disconnect network state, a user can open a web configuration page of an embedded web server of the wireless broadband device in a Local Area Network (LAN) through the network terminal (e.g. a computer), the web configuration page is consistent with a web configuration page of the remote server when the wireless broadband device is in a log-in network state, but the configuration page of the embedded web server is in local, and the web configuration page of the remote server is at a remote end. The wireless broadband device sets the parameter information within the NV according to a setting request (http-set) for setting the parameter information of the wireless broadband device sent by the network terminal. Changes of the parameter information of the wireless broadband device will be saved in flash of the wireless broadband device.

In step 602, when the wireless broadband device is in the log-in network (online) state, the wireless broadband device sends an update notification to the remote server, and the update notification includes changed contents of the parameter information within the NV.

Specifically, when the wireless broadband device logs on the network, the wireless broadband device can send the update notification to the remote server. For example when the wireless broadband device logs on the network, the wireless broadband device sends a trap message in an SNMP format as the update notification to a port 162 of the remote server.

In step 603, the remote server sets corresponding parameter information in an MIB preset in the wireless broadband device according to the update notification, to make parameter information within an OID of the MIB consistent with the parameter information within the NV.

It can be known from the above that, the user can set the parameter information of the wireless broadband device when the wireless broadband device is in the disconnect network (offline) state. Therefore, the user setting the parameter information of the wireless broadband device will not be limited by whether the wireless broadband device logs on the network or not, which is convenient for the user to operate, and a remote terminal can also configure and manage the wireless broadband device.

In order to implement the above method, the present document provides a remote server, and as shown in FIG. 8, the remote server includes:
an acquisition request sending unit, configured to: send a request for acquiring parameter information of a wireless broadband device to the wireless broadband device;
a setting request sending unit, configured to: perform a form conversion on a request for setting the parameter information of the wireless broadband device sent by a network terminal and send it to the wireless broadband device;
an MIB setting unit, configured to: set corresponding parameter information in an MIB preset in the wireless broadband device according to an update notification sent by the wireless broadband device, to make parameter information within an OID of the MIB consistent with parameter information within an NV.

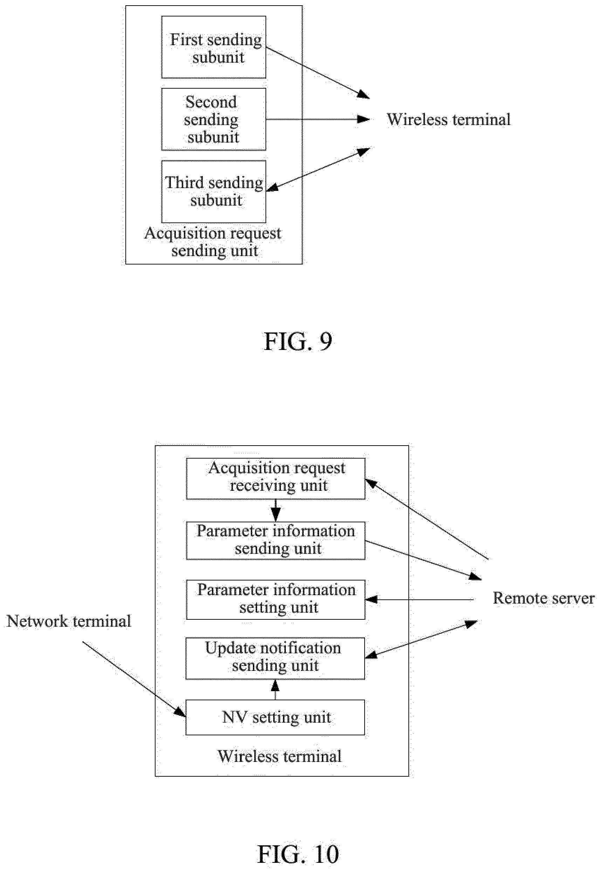

As shown in FIG. 9, the acquisition request sending unit includes:
a first sending unit, configured to: send the request for acquiring the information of the wireless broadband device to the wireless broadband device according to a set time interval;
a second sending unit, configured to: send the request for acquiring the information of the wireless broadband device to the wireless broadband device according to a received acquisition command;
a third sending unit, configured to: send the request for acquiring the information of the wireless broadband device to the wireless broadband device according to the update notification sent by the wireless broadband device.

The present document also provides a wireless broadband device, and as shown in FIG. 10, the wireless broadband device includes: an acquisition request receiving unit and a parameter information sending unit, wherein,
the acquisition request receiving unit is configured to: receive an acquisition request sent by a remote server;
the parameter information sending unit is configured to: send corresponding parameter information in an MIB preset in the wireless broadband device to the remote server according to the acquisition request sent by the remote server.

The wireless broadband device also includes: an update notification sending unit, configured to send an update notification to the remote server when an operation of setting occurs on the wireless broadband device.

The wireless broadband device also includes: a parameter information setting unit, configured to set the corresponding parameter information in the MIB preset in the wireless broadband device according to a received request;

The remote server performs a form conversion on a received request for setting parameter information of the wireless broadband device sent by a network terminal and sends it to the wireless broadband device.

The wireless broadband device also includes: an NV setting unit, configured to: when the wireless broadband device is in a disconnect network state, according to the request for setting the parameter information of the wireless broadband device sent by the network terminal, set parameter information within a Node Value (NV);
the update notification sending unit is further configured to: when the wireless broadband device is in a log-in network state, send an update notification to the remote server, wherein the update notification includes changed contents of the parameter information within the NV.

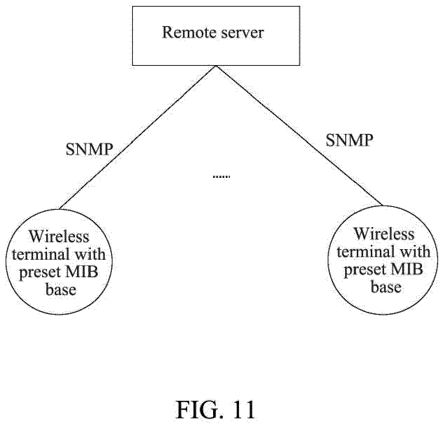

The present document also provides a system for a remote server managing a wireless broadband device, and as shown in FIG. 11, the system includes: the remote server and at least one wireless broadband device.

The remote server is configured to: send a request for acquiring parameter information of the wireless broadband device to the wireless broadband device; perform a form conversion on a request for setting the parameter information of the wireless broadband device sent by a network terminal and send it to the wireless broadband device; and set corresponding parameter information in an MIB preset in the wireless broadband device according to an update notification sent by the wireless broadband device, to make parameter information within an OID of the MIB consistent with parameter information within an NV.

The wireless broadband device is configured to: receive an acquisition request sent by the remote server; and send the corresponding parameter information in the MIB preset in the wireless broadband device to the remote server according to a received acquisition request.

Alternatively, the wireless broadband device is further configured to: when an operation of setting occurs, send the update notification to the remote server.

Alternatively, the wireless broadband device is further configured to: set the corresponding parameter information in the MIB preset in the wireless broadband device according to a received request; the remote server performs a form conversion on a received request for setting parameter information of the wireless broadband device sent by a network terminal and sends it to the wireless broadband device.

The present document is applied to wireless broadband devices such as data cards or MiFi products in various systems, and the systems can include: Time Division-Synchronous Code Division Multiple Access (TD-SCDMA), Wideband Code Division Multiple Access (WCDMA), CDMA2000, Worldwide Interoperability for Microwave Access (WIMAX), Long Term Evolution (LTE) and High Speed Downlink Packet Access (HSDPA) and so on.

The above description is only the preferred examples of the present document, which is not used to limit the protection scope of the present document. The scope of protection is defined by the appended claims.

## Claims

1. A method for a remote server managing a wireless broadband device, comprising:
when the wireless broadband device is in a disconnect network state, the wireless broadband device setting parameter information within a local Node Value, NV, according to a request for setting parameter information of the wireless broadband device sent by a network administrator terminal (601);
when the wireless broadband device is in a log-in network state, the wireless broadband device sending an update notification to the remote server, and the update notification carrying changed contents of the parameter information within the local NV (602); and
the remote server setting corresponding parameter information in a management information base, MIB, preset in the wireless broadband device according to the update notification, to make parameter information within an object identifier, OID, of the MIB consistent with the parameter information within the local NV (603).

2. The method according to claim 1, wherein, the wireless broadband device sending an update notification to the remote server is: when the wireless broadband device logs on a network, the wireless broadband device sending the update notification to the remote server.

3. A remote server, comprising:
an acquisition request sending unit, configured to: send a request for acquiring parameter information of a wireless broadband device to the wireless broadband device;
a setting request sending unit, configured to: perform a form conversion on a request for setting the parameter information of the wireless broadband device sent by a network administrator terminal and send the request after the form conversion to the wireless broadband device; wherein the form conversion is a HTTP-SNMP translation; and
an MIB setting unit, configured to: set corresponding parameter information in an MIB preset in the wireless broadband device according to an update notification sent by the wireless broadband device, to make parameter information within an object identifier, OID, of the MIB consistent with parameter information within a local NV.

4. The remote server according to claim 3, wherein, the acquisition request sending unit comprises:
a first sending unit, configured to: send the request for acquiring the information of the wireless broadband device to the wireless broadband device according to a set time interval; or
a second sending unit, configured to: send the request for acquiring the information of the wireless broadband device to the wireless broadband device according to a received acquisition command; or
a third sending unit, configured to: send the request for acquiring the information of the wireless broadband device to the wireless broadband device according to the update notification sent by the wireless broadband device.

5. A wireless broadband device, comprising: an acquisition request receiving unit and a parameter information sending unit, wherein,
the acquisition request receiving unit is configured to: receive an acquisition request sent by a remote server; and
the parameter information sending unit is configured to: when the wireless broadband device is in a log-in network state, send corresponding parameter information in an MIB preset in the wireless broadband device to the remote server according to a received acquisition request; wherein
the wireless broadband device further comprises:
an NV setting unit, configured to: when the wireless broadband device is in a disconnect network state, according to the request for setting the parameter information of the wireless broadband device sent by the network administrator terminal, set parameter information within a local Node Value, NV; and
the update notification sending unit is further configured to: when the wireless broadband device is in the log-in network state, send an update notification to the remote server, and the update notification includes changed contents of the parameter information within the local NV.

6. The wireless broadband device according to claim 5, wherein, the wireless broadband device further comprises:
an update notification sending unit, configured to: when an operation of setting occurs on the wireless broadband device, send an update notification to the remote server.

7. The wireless broadband device according to claim 5, wherein, the wireless broadband device further comprises:
a parameter information setting unit, configured to: set the corresponding parameter information in the MIB preset in the wireless broadband device according to a received request; wherein,
the received request for setting parameter information of the wireless broadband device sent by a network administrator terminal has performed a form conversion and was sent to the wireless broadband device by the remote server.

## Patentansprüche

1. Verfahren für einen Remote-Server, der eine drahtlose Breitbandvorrichtung verwaltet, **dadurch gekennzeichnet, dass** es umfasst:
wenn sich die drahtlose Breitbandvorrichtung in einem nicht verbundenen Netzwerkzustand befindet, stellt die drahtlose Breitbandvorrichtung Parameterinformationen innerhalb eines lokalen Knotenwerts, NV ("node value"), gemäß einer Anforderung zum Einstellen von Parameterinformationen der drahtlosen Breitbandvorrichtung ein, die von einem Netzwerkadministrator-Endgerät (601) gesendet werden;
wenn sich die drahtlose Breitbandvorrichtung in einem Anmelde-Netzwerkzustand befindet, sendet die drahtlose Breitbandvorrichtung eine Aktualisierungsbenachrichtigung an den Remote-Server und die Aktualisierungsbenachrichtigung trägt geänderte Inhalte der Parameterinformationen innerhalb des lokalen NV (602); und
der Remote-Server stellt entsprechende Parameterinformationen in einer Managementinformationsbasis, MIB, die in der drahtlosen Breitbandvorrichtung gemäß der Aktualisierungsbenachrichtigung voreingestellt sind, ein, um Parameterinformationen innerhalb einer Objektkennung, OID, der MIB, mit den Parameterinformationen innerhalb des lokalen NV (603) in Übereinstimmung zu bringen.

2. Verfahren nach Anspruch 1, wobei die drahtlose Breitbandvorrichtung, die eine Aktualisierungsbenachrichtigung an den Remote-Server sendet, ist: wenn sich die drahtlose Breitbandvorrichtung in einem Netzwerk anmeldet, sendet die drahtlose Breitbandvorrichtung die Aktualisierungsbenachrichtigung an den Remote-Server.

3. Remote-Server, **dadurch gekennzeichnet, dass** er umfasst:
eine Erfassungsanforderungs-Sendeeinheit, ausgelegt zum: Senden einer Anforderung zum Erfassen von Parameterinformationen einer drahtlosen Breitbandvorrichtung an die drahtlose Breitbandvorrichtung;
eine Einstellanforderungs-Sendeeinheit, die ausgelegt ist zum: Durchführen einer Formularkonvertierung bei einer Anforderung zum Einstellen der Parameterinformationen der von einem Netzwerkadministrator-Endgerät gesendeten drahtlosen Breitbandvorrichtung und Senden der Anforderung nach der Formularkonvertierung an die drahtlose Breitbandvorrichtung; wobei die Formularkonvertierung eine HTTP-SNMP-Übersetzung ist; und
eine MIB-Einstelleinheit, die ausgelegt ist zum: Einstellen entsprechender Parameterinformationen in einer MIB-Voreinstellung in der drahtlosen Breitbandvorrichtung gemäß einer Aktualisierungsbenachrichtigung, die von der drahtlosen Breitbandvorrichtung gesendet wird, um Parameterinformationen innerhalb einer Objektkennung, OID, der MIB mit Parameterinformationen innerhalb einer lokalen NV in Einklang zu bringen.

4. Remote-Server nach Anspruch 3, wobei die Erfassungsanforderungs-Sendeeinheit umfasst:
eine erste Sendeeinheit, die ausgelegt ist zum: Senden der Anforderung zum Erfassen der Informationen der drahtlosen Breitbandvorrichtung an die drahtlose Breitbandvorrichtung gemäß einem festgelegten Zeitintervall; oder
eine zweite Sendeeinheit, die ausgelegt ist zum: Senden der Anforderung zum Erfassen der Informationen der drahtlosen Breitbandvorrichtung an die drahtlose Breitbandvorrichtung gemäß einem empfangenen Erfassungsbefehl; oder
eine dritte Sendeeinheit, die ausgelegt ist zum: Senden der Anforderung zum Erfassen der Informationen der drahtlosen Breitbandvorrichtung an die drahtlose Breitbandvorrichtung gemäß der von der drahtlosen Breitbandvorrichtung gesendeten Aktualisierungsbenachrichtigung.

5. Drahtlose Breitbandvorrichtung, **dadurch gekennzeichnet, dass** sie umfasst: eine Erfassungsanforderungsempfangseinheit und eine Parameterinformationssendeeinheit, wobei,
die Erfassungsanforderungsempfangseinheit ausgelegt ist zum: Empfangen einer Erfassungsanforderung, die von einem Remote-Server gesendet wird; und
die Parameterinformationssendeeinheit ausgelegt ist zum: wenn sich die drahtlose Breitbandvorrichtung in einem Anmelde-Netzwerkzustand befindet, Senden entsprechender Parameterinformationen in einer MIB-Voreinstellung in der drahtlosen Breitbandvorrichtung an den Remote-Server gemäß einer empfangenen Erfassungsanforderung; wobei
die drahtlose Breitbandvorrichtung ferner umfasst:
eine NV-Einstelleinheit, die ausgelegt ist zum: wenn sich die drahtlose Breitbandvorrichtung in einem nicht verbundenen Netzwerkzustand befindet, gemäß der Anforderung zum Einstellen der vom Netzwerkadministrator-Endgerät gesendeten Parameterinformationen der drahtlosen Breitbandvorrichtung, Einstellen von Parameterinformationen innerhalb eines lokalen Knotenwerts, NV; und
die Aktualisierungsbenachrichtigungs-Sendeeinheit ferner ausgelegt ist zum: wenn sich die drahtlose Breitbandvorrichtung im Zustand des Anmelde-Netzwerkes befindet, Senden einer Aktualisierungsbenachrichtigung an den Remote-Server, und die Aktualisierungsbenachrichtigung enthält geänderte Inhalte der Parameterinformationen innerhalb der lokalen NV.

6. Drahtlose Breitbandvorrichtung nach Anspruch 5, wobei die drahtlose Breitbandvorrichtung ferner umfasst:
eine Aktualisierungsbenachrichtigungs-Sendeeinheit, die ausgelegt ist zum: Senden einer Aktualisierungsbenachrichtigung an den Remote-Server, wenn ein Vorgang der Einstellung auf der drahtlosen Breitbandvorrichtung auftritt.

7. Drahtlose Breitbandvorrichtung nach Anspruch 5, wobei die drahtlose Breitbandvorrichtung ferner umfasst:
eine Parameterinformationseinstelleinheit, die ausgelegt ist zum: Einstellen der entsprechenden Parameterinformation in der MIB-Voreinstellung in der drahtlosen Breitbandvorrichtung gemäß einer empfangenen Anforderung; wobei,
die empfangene Anforderung zum Einstellen von Parameterinformationen der drahtlosen Breitbandvorrichtung, die von einem Netzwerkadministrationsendgerät gesendet wird, eine Formularkonvertierung durchgeführt und vom Remote-Server an die drahtlose Breitbandvorrichtung gesendet wird.

## Revendications

1. Procédé destiné à un serveur distant gérant un dispositif à large bande sans fil, **caractérisé en ce qu'**il comprend :
lorsque le dispositif à large bande sans fil se trouve dans un état de réseau déconnecté, le dispositif à large bande sans fil règle des informations de paramètres à l'intérieur d'une valeur de noeud, NV, locale, en fonction d'une demande servant à régler des informations de paramètres du dispositif à large bande sans fil envoyées par un terminal administrateur de réseau (601) ;
lorsque le dispositif à large bande sans fil se trouve dans un état de réseau de connexion, le dispositif à large bande sans fil envoie une notification de mise à jour au serveur distant, et la notification de mise à jour achemine les contenus modifiés des informations de paramètres à l'intérieur de la NV locale (602) ; et
le serveur distant règle les informations de paramètres correspondantes dans une base d'informations de gestion, MIB, prédéfinie dans le dispositif à large bande sans fil en fonction de la notification de mise à jour, afin de rendre les informations de paramètres à l'intérieur d'un identifiant d'objet, OID, de la MIB compatibles avec les informations de paramètres à l'intérieur de la NV locale (603).

2. Procédé selon la revendication 1, dans lequel le dispositif à large bande sans fil envoyant une notification de mise à jour au serveur distant se produit : lorsque le dispositif à large bande sans fil se connecte sur un réseau, le dispositif à large bande sans fil envoie la notification de mise à jour au serveur distant.

3. Serveur distant, **caractérisé en ce qu'**il comprend :
une unité d'envoi de demande d'acquisition, configurée pour: envoyer une demande permettant d'acquérir des informations de paramètres d'un dispositif à large bande sans fil au dispositif à large bande sans fil ;
une unité d'envoi de demande de réglage, conçue pour : exécuter une conversion de forme sur une demande pour régler les informations de paramètres du dispositif à large bande sans fil envoyées par un terminal administrateur de réseau et envoyer la demande après la conversion de forme au dispositif à large bande sans fil ; dans lequel la conversion de forme est une translation HTTP-SNMP ; et
une unité de réglage MIB, conçue pour : régler des informations de paramètres correspondantes dans une MIB prédéfinie dans le dispositif à large bande sans fil en fonction d'une notification de mise à jour envoyée par le dispositif à large bande sans fil, afin de rendre les informations de paramètres à l'intérieur d'un identifiant d'objets, OID, de la MIB compatibles avec des informations de paramètres à l'intérieur d'une NV locale.

4. Serveur distant selon la revendication 3, dans lequel l'unité d'envoi de demande d'acquisition comprend :
une première unité d'envoi, conçue pour : envoyer la demande permettant d'acquérir les informations du dispositif à large bande sans fil au dispositif à large bande sans fil en fonction d'un intervalle temporel réglé ; ou
une deuxième unité d'envoi, conçue pour : envoyer la demande permettant d'acquérir les informations du dispositif à large bande sans fil au dispositif à large bande sans fil en fonction d'une commande d'acquisition reçue ; ou
une troisième unité d'envoi, conçue pour : envoyer la demande permettant d'acquérir les informations du dispositif à large bande sans fil au dispositif à large bande sans fil en fonction de la notification de mise à jour envoyée par le dispositif à large bande sans fil.

5. Dispositif à large bande sans fil, **caractérisé en ce qu'**il comprend : une unité de réception de demande d'acquisition et une unité d'envoi d'informations de paramètres, dans lequel,
l'unité de réception de demande d'acquisition est conçue pour : recevoir une demande d'acquisition envoyée par un serveur distant ; et
l'unité d'envoi d'informations de paramètres est conçue pour : lorsque le dispositif à large bande sans fil se trouve dans un état de réseau de connexion, envoyer des informations de paramètres correspondantes dans une MIB prédéfinie dans le dispositif à large bande sans fil au serveur distant en fonction d'une demande d'acquisition reçue ; dans lequel
le dispositif à large bande sans fil comprend en outre :
une unité de réglage NV, conçue pour : lorsque le dispositif à large bande sans fil se trouve dans un état de réseau déconnecté, en fonction de la demande permettant de régler les informations de paramètres du dispositif à large bande sans fil envoyé par le terminal administrateur de réseau, régler des informations de paramètres à l'intérieur d'une valeur de noeud, NV, locale ; et
l'unité d'envoi de notification de mise à jour est conçue en outre pour : lorsque le dispositif à large bande sans fil se trouve dans l'état de réseau de connexion, envoyer une notification de mise à jour au serveur distant, et la notification de mise à jour comprend des contenus modifiés des informations de paramètres à l'intérieur de la NV locale.

6. Dispositif à large bande sans fil selon la revendication 5, dans lequel, le dispositif à large bande sans fil comprend en outre :
une unité d'envoi de notification de mise à jour, conçue pour : lorsqu'une opération de réglage se produit sur le dispositif à large bande sans fil, envoyer une notification de mise à jour au serveur distant.

7. Dispositif à large bande sans fil selon la revendication 5, dans lequel le dispositif à large bande sans fil comprend en outre :
une unité de réglage d'informations de paramètres, conçue pour : régler les informations de paramètres correspondantes dans la MIB prédéfinie dans le dispositif à large bande sans fil en fonction d'une demande reçue ; dans lequel
la demande reçue permettant de régler des informations de paramètres du dispositif à large bande sans fil envoyées par un terminal administrateur de réseau est exécutée sous une conversion de forme et envoyée au dispositif à large bande sans fil par le serveur distant.
